# EUROPEAN PATENT SPECIFICATION

(11) **EP 1 832 507 B1**
(45) Date of publication and mention of the grant of the patent: **29.04.2009**
(21) Application number: 06004706.5
(22) Date of filing: 08.03.2006
(51) Int. Cl.: B64C 1/14

(54) **Deceleration device**
Abbremsmechanismus
Dispositif de freinage

(43) Date of publication of application: 12.09.2007
(73) Proprietor: Airbus Deutschland GmbH, 21129 Hamburg (DE)
(72) Inventor: French, Clive, Woodthorpe Nottingham, NG5 4NX (GB)
(74) Representative: Maiwald Patentanwalts GmbH

(56) References cited:
- DE-C- 516 627
- FR-A- 2 002 658
- US-A- 2 659 573
- US-A- 3 182 935
- US-A1- 2005 082 433

## Description

### FIELD OF THE INVENTION

The present invention relates to dissipation of energy. In particular, the present invention relates to a deceleration device which is adapted to gradually dissipate kinetic energy. Moreover, the present invention relates to a cockpit door which is adapted to be connected to the deceleration device as well as to an aircraft being provided with a cockpit door comprising the deceleration device of the present invention.

### TECHNOLOGICAL BACKGROUND

The cockpit door aboard an aircraft provides the primary means of dissipating pressure from the cabin to the cockpit during a cockpit decompression case. A cockpit decompression case may occur as a minimal opening involving relatively slow bleed of pressure up to a maximum opening (as defined by aviation authorities) involving a rapid loss of pressure. To ensure that the delta pressure build up upon the monuments and structure that form the physical barrier between the cabin and cockpit does not exceed the structural limitations, the cockpit door must release and open to a specific venting area within a short time frame. Delay of the door to provide adequate venting may result in catastrophic structural failure.

The total time frame for the door to provide an effective venting area may be defined as the time [ms] for releasing the door lock and the time [ms] for rotating the door open, for example to an opening angle of more than 80°.

To satisfy certain certification requirements defined by aviation authorities, it has to be demonstrated that an aircraft can survive a decompression case without subsequent loss of essential structure/equipment and life. For example, JAR 25.365(e) (2) specifies that the aircraft structure must be able to withstand the depressurisation caused by an instant opening of a predetermined area in the pressurised shell, at any operating altitude.

From the beginning of a cockpit decompression event to the point of door lock release delta air pressure is acting upon the door, as time from the decompression event increases, so the delta air pressure load upon the door increases. The delta air pressure load causes the door to rotate open and accelerate, imparting kinetic energy into the door. In this connection, the resultant kinetic energy is dependant upon the air pressure load over time and the moment of inertia (MOI) of the door. This means that the slower the door is unlocked the higher the delta air pressure load at the point of release and that the higher the MOI of the door the longer the duration of (high) air pressure upon the door. Both factors increase the final kinetic energy of the door. Thus cockpit doors that are compliant with post the 9/11 security rules have a high kinetic energy due to the reinforced construction of the door.

Therefore, the cockpit doors should unlock rapidly and rotate through to a minimum venting area (for example more than 80°) as quickly as possible in the event of a cockpit decompression.

Once the door has rotated open sufficient to provide effective venting it must be decelerated, wherefore the energy present in the door must be dissipated without the door detaching (from its hinges) and without damage to the airframe. In particular, since a seat may be installed in the path of the rotating door, it must be ensured that no injuries will be caused to a flight crew member on that seat. Otherwise, without an effective means of energy dissipation, the door, once it has passed 90 degrees, will collide with the seat causing potential injury to occupant and possible detachment of the seat and/or detach the door from its hinges, causing unacceptable structural/equipment damage and possible crew injury.

The energy present in the door must be absorbed without adversely affecting the cockpit wall pressure difference. Allowing the door to rotate open unhindered to the minimum free venting area would advantageously limit the pressure difference load upon the cockpit wall. However the distance to decelerate the door before impact with the adjacent seat is minimal and amounts to approximately 13° of rotation in A 380 aircraft only. In this case, the resultant equivalent static reaction load applied at the centre of area of the door would be in excess of 4500 daN (4.500 kg), whereby the door as well as the adjacent seat might be damaged.

D1 (US 3 182 935 A) discloses an aircraft arresting system for stopping of an aircraft aboard an aircraft carrier within a predefined distance.

### SUMMARY OF THE INVENTION

Amongst other things, it may be an object of the present invention to provide a realization, which is adapted to generate a reacting force to gradually reduce the end energy of a cockpit door in the event of a cockpit decompression.

Amongst other things, the above-mentioned object, which forms a basis of the present invention, may be met by a deceleration device which is adapted for gradually dissipating the kinetic energy of a swivelling door, for example, in the event of a cockpit decompression. Inter alia, the deceleration device comprises a spool reel which is designed to carry a belt which is wound up on the spool reel. The belt of the spool reel is adapted to be automatically connected to the cockpit door in the event of a cockpit decompression in order to absorb the kinetic energy of the cockpit door. The deceleration device moreover comprises an elevating spindle which is adapted to be driven by said spool reel in the event that the belt is being retracted from the spool reel. The deceleration device includes at least one collet which is screwed to the elevating spindle so that the collet may move in a longitudinal direction of the elevating spindle due to a rotation of the spool reel. For purposes of dissipating kinetic energy, the deceleration device includes at least one spring assembly which is installed between the collet and a fixed bearing portion of the deceleration device. Hence, the at least one collet will be screwed towards the fixed bearing portion by retraction of the belt from the spool reel whereby the spring assembly will be compressed, so that a reaction load is generated by the spring assembly counteracting the retraction of the belt.

Therefore, by means of the deceleration device it is possible to decelerate the acceleration of a cockpit door, for example, in the event of a cockpit decompression by generating a reacting force which partially counteracts the movement of the door.

According to another exemplary embodiment of the present invention, the spring assembly comprises a plurality of compression springs which are situated between the collet and the spring bearing housing thereby surrounding the elevating spindle. The provision of a plurality of compression springs may be useful since in the event that a single spring should break down, the deceleration device will remain operative. For example, the plurality of compression springs may coaxially surround the elevating spindle. As an alternative, the plurality of compression springs may be disposed in regular intervals around the elevating spindle.

According to a further embodiment of the invention, the collet may be shaped in the form of a polygon in plan view which comprises a plurality of rounded edges which form receptacles for the plurality of compression springs which are disposed at regular intervals around the elevating spindle.

To avoid a rotation of the collet due to rotation of the elevating spindle, the deceleration device may further comprise at least one cup-shaped housing comprising a cam profile which matches the polygonal shape of the collet to allow the collet to slide into the housing and to avoid rotation of the collet. In this embodiment, the fixed bearing portion mentioned above forms part of the base of the housing, so that the plurality of compression springs is situated between the base of the cup-shaped housing and the collet. Instead of providing a cup-shaped housing for purposes of guiding the collet in the longitudinal direction of the elevating spindle, it may be possible to provide other guiding means for guiding the collet in longitudinal direction of the elevating spin thereby exclusively avoiding a rotation of the collet with respect to the bearing portion.

According to another exemplary embodiment, the elevating spindle comprises a bearing shaft which is rotatably mounted in the fixed bearing portion and a threaded shaft sleeve surrounding the bearing shaft. In this embodiment, the bearing shaft, the bearing sleeve and the spool reel surrounding the elevating spindle are connected to each other by means of a single shear pin. The connection of these three elements by means of a single shear pin may be useful, since in case that the total travel of the collet along the elevating spindle should be exploited, further rotation of the spool reel will not damage the elevating spindle as a whole. Rather, the shear pin will be sheared off whereby it is possible that only the shaft sleeve will be damaged and the bearing shaft will remain intact. Moreover, the provision of a single shear pin may be useful since in case that the total travel of the collet along the elevating spindle should be exploited, further kinetic energy will be dissipated by shearing the shear pin or the elevating shaft.

To provide a further means for dissipating kinetic energy in the event that the total travel of the collet along the elevating shaft should be exploited, the deceleration device may further comprise at least one energy-absorbing tube surrounding the elevating spindle which is arranged to come prior into contact with the fixed bearing portion than the at least one collet to dissipate further energy by deformation of the at least one energy absorbing tube. For example, the energy absorbing tube may be connected to the collet surrounding the elevating spindle.

According to yet another exemplary embodiment, the deceleration device may comprise a plurality of wave spring washers, which have a negligible spring constant. In this connection, the plurality of spring washers is connected in series with the plurality of compression springs, so that during an initial rotation of the spool reel no reaction load will be generated due to the negligible spring constant of the plurality of the wave spring washers.

The provision of the wave spring washers may be useful since it may be advantageous to allow the door to open and to initially accelerate as quickly as possible during a first opening angle so that in case of a cockpit decompression the pressure load across the door will not adversely increase.

According to another exemplary embodiment of the present invention, the whole deceleration device is symmetrically and redundantly designed. In this connection, the deceleration device comprises an elevating spindle which features right-hand and left-hand threads at either side of a central portion which is surrounded by the spool reel. Due to a retraction force, the spool reel screws a first collet toward a first fixed bearing portion, thereby compressing a first spring assembly situated between the first collet and the first fixed bearing portion. Accordingly, due to the rotation of the spool reel initiated by the retraction force applied to the belt, the spool reel screws a second collet toward a second fixed bearing portion, thereby compressing a second spring assembly situated between the first collet and the first fixed bearing portion.

According to a yet another exemplary embodiment of the present invention, a cockpit door is provided which is adapted to be connected to the deceleration device as is illustrated in the preceding paragraphs to decelerate the cockpit door in the event of a cockpit decompression in order to dissipate their kinetic energy.

Finally, according to a last exemplary embodiment aircraft is provided comprising a cockpit door assembly including a deceleration device as illustrated in the preceding paragraphs.

### SHORT DESCRIPTION OF THE DRAWINGS

In the following, the present invention will be illustrated with reference to the drawings enclosed herewith.

In the drawings:
- Fig. 1: shows a diagram illustrating pressure versus energy over door angle;
- Fig. 2: shows a cross section of the deceleration device of the present invention;
- Fig. 3: shows a diagram illustrating the effect of the deceleration device with respect to the door energy;
- Fig. 4: shows a diagram illustrating the effect of the deceleration device with respect to the door opening time; and
- Fig. 5: shows a diagram illustrating the effect of the deceleration device with respect to the differential pressure.

In the following description of the figures, the same reference characters are used for identical or similar elements.

### DETAILED DESCRIPTION OF AN EXEMPLARY EMBODIMENT

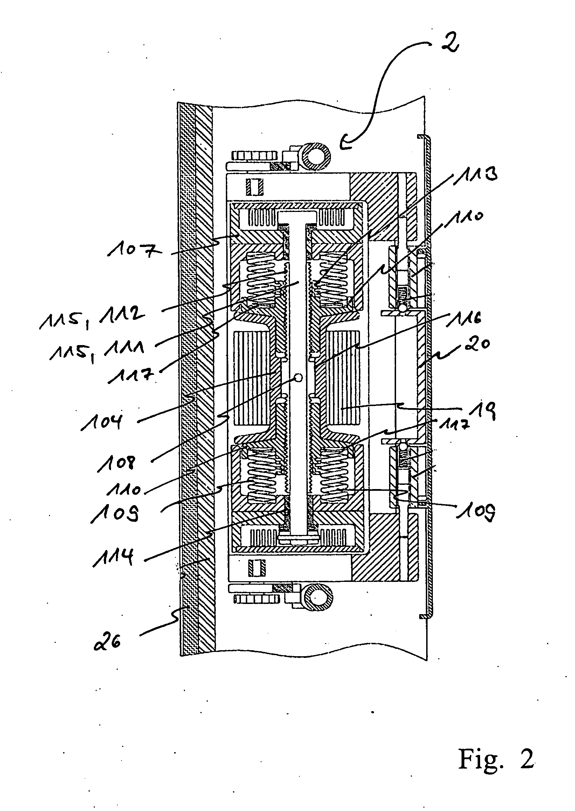

The following paragraphs detail the deceleration device 2, which is mounted within doorpost 26. As will become apparent from Fig. 2, the deceleration device 2 comprises a housing 107 in which the main components of the device 2 are installed. In particular, an elevating spindle 115 extends in a vertical direction and rotates in two bearings 114 which are supported on housing 107. The elevating spindle 115 may consist of two mating parts, a bearing shaft 111 and a shaft sleeve 112 featuring both right hand and left hand threads either side of a short central plain shank 116.

The deceleration device 2 moreover comprises a spool reel 104 which surrounds the plain shank 116 of the elevating spindle 115. A belt 19 is wound up on the spool reel 104 and is connected to a buckle 20 which is positively held in position by means of two ball catches. The shaft assembly 111, 112 slides into the spool reel 104 and is locked to the spool reel 104 by means of a single shear pin 108. At either end the shaft is supported by the plain bearings 114 which are in turn supported to the main housing 107.

On each side of the spool reel 104, steel collets 110 screw down the threads of the shaft sleeve 112. The collets 110 may be profile milled to a rounded hexagonal shape and fit within a matching profile of the housing 107. Between collet 110 and housing 107 six compression springs are installed on either side of the plain shank 116 in recessed pockets in both collet and housing, such that they are held in position by the collets 110 and the housing 107.

For example, in the event that a traction force is applied to the buckle 20 being connected to belt 19, belt 19 will be retracted from the spool reel 104 causing the spool reel 104 to rotate. This rotation will be directly transferred (via the shear pin) to the shaft assembly. As each of the collets 110 is captivated by its conforming profile in its respective housing 107, the rotational movement of the spool reel 104 and shaft assembly 111, 112 is transferred to the linear movement of the collets 110. The movement of the collets 110 is outwards from the spool reel 104 in the direction of the housing 107 such that the captivated springs are compressed along their free length. Thus for each 360° of rotation 1,5 mm of linear travel (standard 10,0 mm metric thread = 1,5 mm pitch) may be achieved. The collective spring force is set to react to a load such that a predetermined constant force is required to extract the belt 19 from the spool reel 104. For example, the springs 109 might be designed to have a constant spring rate such that the force remains constant through the angular rotation of the spool 104. However as the belt 19 retracts from the spool 104 the diameter of the belt on spool reel 104 decreases. Hence, each successive rotation requires less length of belt due to the geometry of the belt on the spool reel 104. So by virtue of the belt geometry the reaction force to the door movement may be described as progressive.

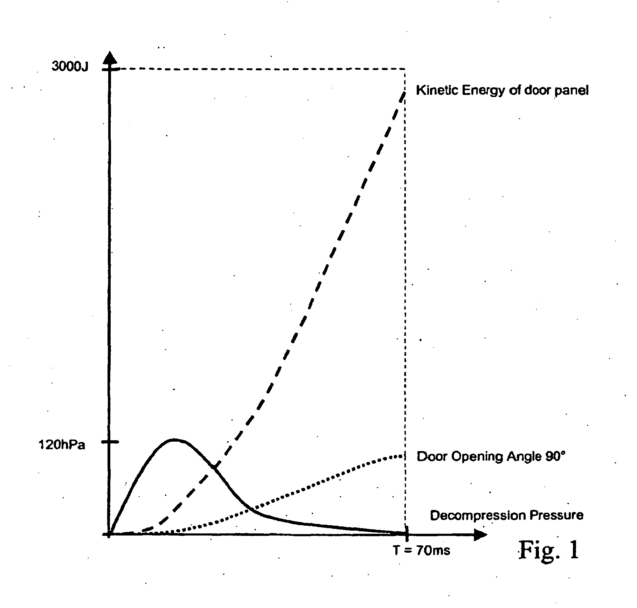

The first rotation of the spool reel 104 does not compress the springs 109 but brings both collets 110 into engagement. This is to allow a single free rotation of the spool reel 104 with minimal force. To this effect, a plurality of wave spring washers 117 having a negligible spring constant may be connected in series with the plurality of compression springs 109, so that during an initial rotation of the spool reel 104 minimal reaction load will be generated due to the negligible spring constant of the plurality of spring washers 117. The first complete rotation may be equivalent to the door opening by approximately 10° (belt extracted by 150mm). This first free movement is intended to allow the door to open and to initially accelerate as quickly as possible so as not to adversely increase the pressure load across the door and is timed to a point where the pressure load peaks and begins to fall whereas the door energy overtakes the peak pressure load and begins to accelerate rapidly (cf. Fig. 1).

Additionally, where maintenance inspection or unit failure or accidental engagement of the belt 19 occurs during normal use, the first free rotation allows the door to open sufficient to allow detachment of the belt from the cabin side. The belt is self-retracting by means of a drive spring situated at one end of the shaft assembly. The drive spring is set to retract the belt by one revolution and is connected to the shaft by means of a sprung loaded gear that will slip freely on the shaft if rotation exceeds one revolution.

The total travel of the collet 110 along the shaft assembly may be 10,5 mm which translates to 7 full turns (760 mm of belt extension). This allows the door to rotate through to its maximum venting area at 80°.

Prior to reaching the end stop a further method of energy absorption may be employed by incorporating an energy absorbing tube 113 into the end of the collets 110 such that the collets 110 contact the housing 107 before the maximum travel of 10,5 mm. Hence, the force which is necessary to collapse the energy absorbing tube 113 is dissipated due to the deformation of the energy absorbing tube 113.

Finally, further kinetic energy may be absorbed from the travelling door at an angle close to its maximum vent area due to the two part design of the elevating spindle 115. The shaft assembly 111, 112 is designed as two parts to allow shearing of the threaded sleeve 112 from the spool reel 104 without affecting the structural integrity of the main support bearing shaft 111. Hence, due to the relative movement of threaded sleeve 112 from the spool reel 104 shearing the single shear pin 108, further kinetic energy may be absorbed.

The intention is to absorb the maximum energy from the travelling door throughout its rotation from 10° onwards, without adversely increasing the pressure load, whilst limiting the maximum reaction load.

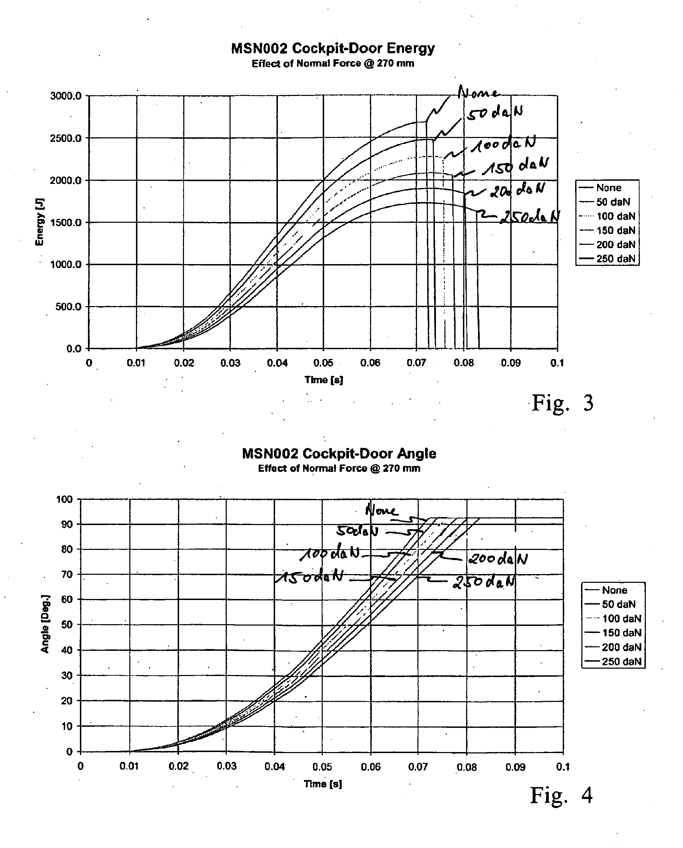

In the following, the effect of the deceleration device 2 on the door will be illustrated. It can be seen from the following graph of Fig. 3 that reacting a force (normal to door plane) at the door centre of area by means of the deceleration device 2 throughout the doors rotation under decompression load will reduce the end energy. In particular:
- Reacting a load of 50daN at the door centre of area will reduce the end energy by 8% (2684J to 2473J).
- Reacting a load of 100daN at the door centre of area will reduce the end energy by 16% (2684J to 2263J).
- Reacting a load of 150daN at the door centre of area will reduce the end energy by 24% (2684J to 2054J).
- Reacting a load of 200daN at the door centre of area will reduce the end energy by 32% (2684J to 1840J).
- Reacting a load of 250daN at the door centre of area will reduce the end energy by 40% (2684J to 1630J).

Assuming a series of reaction loads as described in the foregoing paragraph, the effect of door opening time is shown in Fig. 4. As will become apparent from Fig. 4,
- Reacting a load of 50daN at the door centre of area increases the time taken to reach the minimum venting area (80°) by 3% (0.067ms to 0.069ms);
- Reacting a load of 100daN at the door centre of area increases the time taken to reach the minimum venting area (80°) by 4.5% (0.067ms to 0.070ms);
- Reacting a load of 150daN at the door centre of area increases the time taken to reach the minimum venting area (80°) by 7.5% (0.067ms to 0.072ms);
- Reacting a load of 200daN at the door centre of area increases the time taken to reach the minimum venting area (80°) by 10.5% (0.067ms to 0.074ms);
- Reacting a load of 250daN at the door centre of area increases the time taken to reach the minimum venting area (80°) by 13% (0.067ms to 0.076ms).

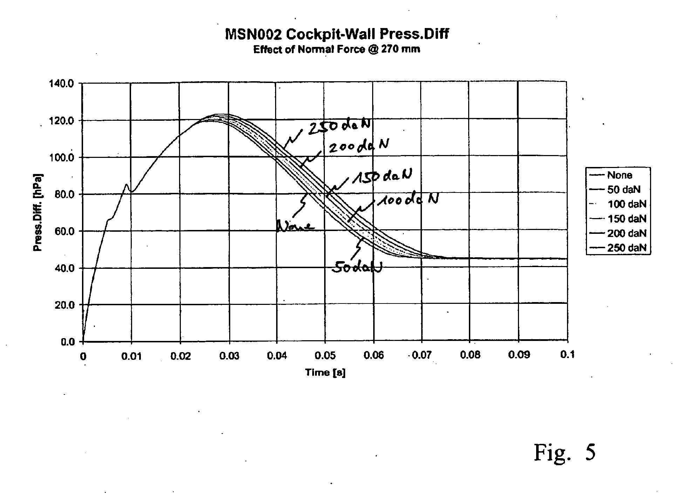

Assuming a series of reaction loads as described above, the effect on the cockpit wall pressure difference is shown in Fig. 5, which shows that
- Reacting a load of 50daN at the door centre of area increases the differential pressure by 0.67% (119 hPa to 119.8 hPa);
- Reacting a load of 100daN at the door centre of area increases the differential pressure by 1.26% (119 hPa to 120.5 hPa);
- Reacting a load of 150daN at the door centre of area increases the differential pressure by 1.85% (119 hPa to 121.2 hPa);
- Reacting a load of 200daN at the door centre of area increases the differential pressure by 2.5% (119 hPa to 122.0 hPa);
- Reacting a load of 250daN at the door centre of area increases the differential pressure by 3.2% (119hPa to 122.8hPa).

Hence, reacting a load equivalent to 250daN at the door Centre of Area reduces the end energy by over 1000 Joules (40%) but increases the cockpit wall differential pressure by just 3.8 hPa (3.2%). Thus a method for controlling and reducing the end energy of the door without substantially increasing the pressure load upon the monuments can be realised by means of the present operation mechanism.

The deceleration device of the present invention has been described within the context of a dissipation of kinetic energy of a cockpit door. However, the deceleration device of the present invention may be used for other purposes in other applications as well, as it will be easily understood by the skilled person.

### REFERENCE LIST

- 2: deceleration device
- 19: belt
- 20: buckle
- 26: doorpost
- 104: spool reel
- 107: housing
- 108: shear pin
- 109: spring
- 110: collet
- 111: bearing shaft
- 112: Shaft sleeve
- 113: energy absorbing tube
- 114: bearing
- 115: elevating spindle
- 116: plain shank
- 117: wave spring washer

## Claims

1. A deceleration device for deceleration of a cockpit door, comprising:
- a spool reel (104) carrying a belt (19) being wound up on the spool reel (104);
- an elevating spindle (115) being driven by the spool reel (104) when the belt (19) is being retracted from the spool reel (104);
- at least one collet (110) screwed to the elevating spindle (115);
- a fixed bearing portion (107); and
- at least one spring assembly (109) being installed between the collet (110) and the fixed bearing portion (107);
wherein the at least one collet (110) is screwed towards the fixed bearing portion by retraction of the belt (19) from the spool reel (104) thereby compressing the spring assembly (109), whereby a reaction load is generated by the spring assembly (109) counteracting the retraction of the belt (19).

2. The deceleration device according to claim 1,
wherein the spring assembly (109) comprises a plurality of compression springs (109) being situated between the collet (110) and the fixed bearing portion and surrounding the elevating spindle (115).

3. The deceleration device according to claim 1 or 2,
wherein the collet (110) is shaped in the form of a polygon in plan view having a plurality of rounded edges forming receptacles for the plurality of compression springs (109).

4. The deceleration device according to one of claims 1 to 3, the deceleration device (2) further comprising:
- at least one cup-shaped housing comprising a profile matching the polygonal shape of the collet to allow the collet (110) to slide into the housing,
wherein the fixed bearing portion forms part of the base of the housing, so that the plurality of compression springs (109) being situated between the base and the collet (110).

5. The deceleration device according to one of claims 1 to 4,
wherein the elevating spindle (115) comprises a bearing shaft (111) being rotatably mounted in the fixed bearing portion and a threaded shaft sleeve (112) surrounding the bearing shaft (111), wherein the bearing shaft (111), the shaft sleeve (112) and the spool reel (104) surrounding the elevating spindle (115) are locked to each other by means of a single shear pin (108).

6. The deceleration device according to one of claims 1 to 5, the deceleration device (2) further comprising:
- at least one energy absorbing tube (113) surrounding the elevating spindle (115) to come prior into contact with the fixed bearing portion than the at least one collet (110), to dissipate further energy by deformation of the at least one energy absorbing tube (113).

7. The deceleration device according to one of claims 2 to 6, the deceleration device (2) further comprising:
- of plurality of spring washers (117) having a negligible spring constant,
wherein the plurality of spring washers (117) is connected in series with the plurality of compression springs (109), so that during an initial rotation of the spool reel (104) no reaction load will be generated due to the negligible spring constant of the plurality of spring washers (117).

8. The deceleration device of claim 1,
wherein the deceleration device (2) is symmetrically designed comprising an elevating spindle (115) featuring right hand and left hand threads at either side of a central portion being surrounded by the spool reel (104), which due to a retraction force screws a first collet (110) towards a first fixed bearing portion thereby compressing a first spring assembly (109) situated between the first collet (110) and the first fixed bearing and screws a second collet (110) towards a second fixed bearing portion thereby compressing a second spring assembly (109) situated between the first collet and the first fixed bearing portion.

9. A cockpit door with a deceleration device (2) according to one of claims 1 to 8 in the event of a cockpit decompression.

10. An aircraft being provided with a cockpit door assembly comprising the deceleration device (2) of one of claims 1 to 8.

## Patentansprüche

1. Eine Verzögerungsvorrichtung zur Abbremsung einer Cockpit-Türe, aufweisend:
• eine Spulrolle (104) mit einem Gurt (19), aufgerollt auf der Spulrolle (104);
• eine Gewindespindel (115) angetrieben durch die Spulrolle (104) durch Abrollen des Gurtes (19) von der Spulrolle (104);
• zumindest ein Spulkopf (110), angeschraubt an der Gewindespindel (115);
• ein festgelegter Teil eines Lagers (107); und
• zumindest eine Federanordnung (109), angeordnet zwischen Spulkopf (110) und dem festgelegten Teil des Lagers (107);
wobei der zumindest eine Spulkopf (110) in Richtung des festgelegten Teils des Lagers durch Abzug des Gurtes (19) von der Spulrolle (104) geschraubt wird und hierbei die Federanordnung (109) komprimiert, wodurch eine Gegenlast durch die Federanordnung (109) erzeugt wird, die dem Abrollen des Gurtes (19) entgegenwirkt.

2. Die Verzögerungsvorrichtung gemäß Anspruch 1,
wobei die Federanordnung (109) eine Mehrzahl von Druckfedern (109) aufweist, welche zwischen dem Spulkopf (110) und dem festgelegten Teil des Lagers angeordnet sind und die Gewindespindel (115) umgeben.

3. Die Verzögerungsvorrichtung gemäß Anspruch 1 oder 2,
wobei der Spulkopf (110) als ein Polygon ausgebildet ist, welches in seinem Grundriss eine Mehrzahl von abgerundeten Ecken aufweist, welche Aufnahmen für die Mehrzahl der Druckfedern (109) ausbilden.

4. Die Verzögerungsvorrichtung gemäß einem der Ansprüche 1 bis 3, die Verzögerungsvorrichtung weiterhin aufweisend:
• zumindest ein kelchförmiges Gehäuse, aufweisend ein Profil passend zur polygonalen Form des Spulkopfes (110), um ein Eingleiten des Spulkopfes (110) in das Gehäuse zu ermöglichen,
wobei der festgelegte Teil des Lagers Teil der Grundplatte des Gehäuses ausbildet, so dass die Mehrzahl der Druckfedern (109) zwischen der Grundplatte und dem Spulkopf (110) angeordnet sind.

5. Die Verzögerungsvorrichtung gemäß einem der Ansprüche 1 bis 4,
wobei die Gewindespindel (115) einen Lagerschaft (111), welcher drehbar gelagert im festgelegten Teil des Lagers ist, und eine Gewindeschafthülle (112), welche den Lagerschaft (111) umgibt, aufweist, wobei der Lagerschaft (111), die Schafthülle (112) und die Spulrolle (104) die Gewindespindel (115) umgebend, unter Verwendung eines einzelnen Scherbolzens (108) aneinander angebracht sind.

6. Die Verzögerungsvorrichtung gemäß einem der Ansprüche 1 bis 5, das die Verzögerungsvorrichtung (2) weiterhin aufweisend:
• zumindest ein Energie absorbierendes Rohr (113), welches die Gewindespindel (115) umgibt, welches zuerst in Kontakt kommt mit dem festgelegten Teil des Lagers, als der zumindest eine Spulkopf (110), zur Abgabe weiterer Energie durch Deformation des zumindest einen Energie absorbierenden Rohrs (113).

7. Die Verzögerungsvorrichtung gemäß einem der Ansprüche 2 bis 6, die Verzögerungsvorrichtung (2) weiterhin aufweisend:
• eine Mehrzahl von Federringen (117) aufweisend eine vernachlässigbare Federkonstante, wobei die Mehrzahl der Federringe (117) in Serie mit der Mehrzahl der Druckfedern (109) verbunden ist, so dass während einer initialen Rotation der Spulrolle (104) durch die vernachlässigbare Federkonstante der Mehrzahl der Federringe (117) keine Gegenkraft erzeugt wird.

8. Die Verzögerungsvorrichtung gemäß Anspruch 1,
wobei die Verzögerungsvorrichtung (2) symmetrisch ausgebildet ist, aufweisend eine Gewindespindel (115) aufweisend rechtsgängige und linksgängige Gewinde auf beiden Seiten eines zentralen Abschnittes umgeben von der Spulrolle (104), welches aufgrund einer Rückzugskraft einen ersten Spulkopf (110) in Richtung eines ersten festgelegten Teils des Lagers schraubt und hierbei eine erste Federanordnung (109) komprimiert, welche zwischen dem ersten Spulkopf (110) und dem ersten festgelegten Teil des Lagers angeordnet ist und einen zweiten Spulkopf (110) in Richtung eines zweiten festgelegten Teils des Lagers schraubt und hierdurch eine zweite Federanordnung (109) komprimiert, welche zwischen dem ersten Spulkopf und dem ersten festgelegten Teil des Lagers angeordnet ist.

9. Cockpit-Türe aufweisend eine Verzögerungsvorrichtung (2) gemäß einem der Ansprüche 1 bis 8 im Falle einer Cockpit Dekompression.

10. Ein Flugzeug aufweisend eine Cockpit-Türanordnung, die Cockpit-Türanordnung aufweisend eine Verzögerungsvorrichtung (2) gemäß einem der Ansprüche 1 bis 8.

## Revendications

1. Dispositif de freinage destiné au freinage d'une porte de poste de pilotage, comportant :
- une bobine d'enroulement (104) supportant une courroie (19) enroulée sur la bobine d'enroulement (104),
- une tige élévatrice (115) entraînée par la bobine d'enroulement (104) lorsque la courroie (19) est rétractée à partir de la bobine d'enroulement (104),
- au moins une douille (110) vissée sur la tige élévatrice (115),
- une partie de palier fixe (107), et
- au moins un ensemble de ressorts (109) installé entre la douille (110) et la partie de palier fixe (107),
dans lequel la au moins une douille (110) est vissée en direction de la partie de palier fixe par rétraction de la courroie (19) à partir de la bobine d'enroulement (104) en comprimant ainsi l'ensemble de ressorts (109), de sorte qu'une charge de réaction est produite par l'ensemble de ressorts (109) en contrecarrant la rétraction de la courroie (19).

2. Dispositif de freinage selon la revendication 1, dans lequel l'ensemble de ressorts (109) comporte une pluralité de ressorts de compression (109) situés entre la douille (110) et la partie de palier fixe et entourant la tige élévatrice (115).

3. Dispositif de freinage selon la revendication 1 ou 2, dans lequel la douille (110) a la forme d'un polygone en vue de dessus, ayant une pluralité de bords arrondis formant des logements pour la pluralité de ressorts de compression (109).

4. Dispositif de freinage selon l'une des revendications 1 à 3, le dispositif de freinage (2) comportant en outre :
- au moins un boîtier en forme de coupelle comportant un profil correspondant à la forme polygonale de la douille pour permettre à la douille (110) de glisser dans le boîtier,
dans lequel la partie de palier fixe forme une partie de la base du boîtier, de telle sorte que la pluralité de ressorts de compression (109) est située entre la base et la douille (110).

5. Dispositif de freinage selon l'une des revendications 1 à 4, dans lequel la tige élévatrice (115) comporte un arbre de palier (111) monté de manière rotative dans la partie de palier fixe et un manchon d'arbre fileté (112) entourant l'arbre de palier (111), dans lequel l'arbre de palier (111), le manchon d'arbre (112) et la bobine d'enroulement (104) entourant la tige élévatrice (115) sont bloqués les uns par rapport aux autres au moyen d'une seule goupille de cisaillement (108).

6. Dispositif de freinage selon l'une des revendications 1 à 5, le dispositif de freinage (2) comportant en outre :
- au moins un tube absorbeur d'énergie (113) entourant la tige élévatrice (115) pour venir en contact avec la partie de palier fixe avant la au moins une douille (110), afin de dissiper de l'énergie supplémentaire par déformation du au moins un tube absorbeur d'énergie (113).

7. Dispositif de freinage selon l'une des revendications 2 à 6, le dispositif de freinage (2) comportant également :
- une pluralité de rondelles élastiques (117) ayant une constant élastique négligeable,
dans lequel la pluralité de rondelles élastiques (117) est reliée en série à la pluralité de ressorts de compression (109), de telle sorte que pendant une rotation initiale de la bobine d'enroulement (104), aucune charge de réaction ne sera produite en raison de la constante élastique négligeable de la pluralité de rondelles élastiques (117).

8. Dispositif de freinage selon la revendication 1, dans lequel le dispositif de freinage (2) est conçu de manière symétrique et comporte une tige élévatrice (115) munie de filets à gauche et à droite de chaque côté d'une partie centrale entourée par la bobine d'enroulement (104) qui, en raison d'une force de rétraction, visse une première douille (110) vers une première partie de palier fixe en comprimant ainsi un premier ensemble de ressorts (109) situé entre la première douille (110) et la première partie de palier fixe, et visse une seconde douille (110) vers une seconde partie de palier fixe en comprimant ainsi un second ensemble de ressorts (109) situé entre la première douille et la première partie de palier fixe.

9. Porte de poste de pilotage munie d'un dispositif de freinage (2) selon l'une des revendications 1 à 8 dans l'éventualité d'une décompression du poste de pilotage.

10. Avion muni d'un ensemble pour porte de poste de pilotage comportant le dispositif de freinage (2) de l'une des revendications 1 à 8.
